# EUROPEAN PATENT SPECIFICATION

(11) **EP 2 461 668 B1**
(45) Date of publication and mention of the grant of the patent: **19.12.2018**
(21) Application number: 10740769.4
(22) Date of filing: 04.08.2010
(51) Int. Cl.: A01J 25/11, A01J 25/12

(54) **CHEESE VAT CONVEYING APPARATUS**
FÖRDERVORRICHTUNG FÜR KÄSEFÄSSER
APPAREIL DE TRANSPORT DE CUVES DE FROMAGERIE

(30) Priority: 05.08.2009 NL 2003335
(43) Date of publication of application: 13.06.2012
(73) Proprietor: Tetra Laval Holdings & Finance S.A., 1009 Pully (CH)
(72) Inventor: SIPMA, Sijmen, NL-8456 HW De Knipe (NL)
(74) Representative: Tetra Pak - Patent Attorneys SE
(86) International application number: PCT/NL2010/050495
(87) International publication number: WO 2011/016723

(56) References cited:
- WO-A1-89/08978
- DE-A1- 1 582 941
- DE-A1- 1 931 038

## Description

The invention relates to a cheese vat conveying apparatus for conveying cheese vats along at least one dosing section of at least one curd draining apparatus, which cheese vat conveying apparatus includes driving means for moving cheese vats along a conveyor track of the cheese vat conveying apparatus and lifting means for bringing cheese vats to be filled into a filling position situated above the conveyor track and lowering filled cheese vats onto the conveyor track again.

Such a cheese vat conveying apparatus is known per se and can be used with vertical curd draining apparatuses of the Tetra Tebel Casomatic type or similar other apparatuses and also with curd draining apparatuses of a different kind, such as a horizontal draining apparatus, for instance of the Tetra Tebel Pressvatic type.

A cheese vat conveying apparatus of the kind indicated serves for conveyance of empty cheese vats to one or more curd draining apparatuses and for conveyance of filled cheese vats from the curd draining apparatus(es) to a next treatment station.

Furthermore, the cheese vat conveying apparatus comprises lifting means at the curd draining apparatus(es). The lifting means in operation lift a cheese vat located in the conveyor track at a vat filling station of a curd draining apparatus to a filling position located above the conveyor track to receive a curd block provided by the curd draining apparatus and then lower the filled cheese vat onto the conveyor track. Usually, the curd block, also referred to as cheese block in this phase of the cheese production, falls into a cheese vat from above. By lifting the cheese vats, the fall height is minimized and damage of the curd blocks is prevented as much as possible.

For the sake of completeness, it is noted that in this text "cheese vat" is understood to mean a cheese mold, in which a drained curd block is deposited. This in contrast to the so-called OST vats, which are sometimes referred to as curd tanks or also as cheese vats. In such vats, milk with rennet and starter is stirred and cut for forming a mixture of whey and curd, which is thereupon supplied to a curd draining apparatus.

The vat filling station of a curd draining apparatus is situated in the dosing section, in which usually an amount of whey is present. As a result, when filling a cheese vat, also whey ends up in the conveying apparatus, together with curd residues. This whey and the curd residues are to be received in the conveying apparatus but also cause fouling of the conveying apparatus and there provide growing conditions for microorganisms that infect the passing whey and vats and via these vats the curd blocks. This can limit the processing of the whey and the curd blocks into high-grade foods.

The cheese vat conveying apparatus can conventionally comprise, for instance, a chain conveyor, which is provided with control elements to have the conveyor stop at the right moments, i.e. at moments that a cheese vat placed on the conveyor is situated just below a vat filling station of a curd draining apparatus.

The cheese vat conveying apparatus can also, likewise conventionally, comprise a pawl conveyor with carrier elements moving back and forth, which in operation displace the cheese vats stepwise over a conveying surface.

The cheese vat conveying apparatus can be an open conveying apparatus, which can be cleaned manually or with a CIP (cleaning in place) irrigation system.

In view of hygiene requirements, however, more and more often use is made of a closed conveying apparatus which is provided with a CIP spray and irrigation system.

A drawback of the use of a cheese vat conveying apparatus is that the lifting means are situated in the conveying apparatus. As a result, in operation, the lifting means foul due to the whey and curd particles ending up in the conveying apparatus during cheese production. As a consequence, the whey ending up in the conveying apparatus and then collected can be used for food products only when the conveyor and the lifting means are flushed intensively during cheese production, for instance with clean water, which subsequently needs to be separated again in the whey processing.

Further prior art is reflected by patent documents WO89/08978A1 and DE1582941A1.

The object of the invention is to obviate or at least reduce the drawback outlined, and generally to provide an efficient, simple-to-clean cheese vat conveying apparatus.

To this end, according to the invention (see claim 1), the cheese vat conveying apparatus has an upper portion in which a conveyor track is situated and at least one lifting platform, which upper portion is separated by a partition from a lower portion, in which at least one lifting mechanism is situated for moving a lifting platform up and down between the conveyor track and the filling position via a lifting arm, wherein the lifting arm extends through a passage opening in the partition, and at the passage opening a sealing is arranged. The partition slopes down slightly in the longitudinal direction of the cheese vat conveying apparatus to promote the drain of whey.

In the following, the invention will be further described with reference to the accompanying drawing.
Fig. 1 shows schematically in front view an example of a setup of a number of curd draining apparatuses and a cheese vat conveying apparatus of the closed type cooperating therewith;
Fig. 2 shows schematically in vertical section an example of a part of a curd draining apparatus with an exemplary embodiment of a cheese vat conveying apparatus according to the invention;
Fig. 3 shows schematically in vertical cross section an example of a cheese vat conveying apparatus according to the invention;
Fig. 4 schematically shows a cutaway front view of a part of an example of a cheese vat conveying apparatus according to the invention;
Fig. 5 schematically shows an example of a lifting mechanism for a cheese vat conveying apparatus according to the invention; and
Fig. 6 schematically shows in cross section an example of a labyrinth seal which is applicable in a cheese vat conveying apparatus according to the invention.

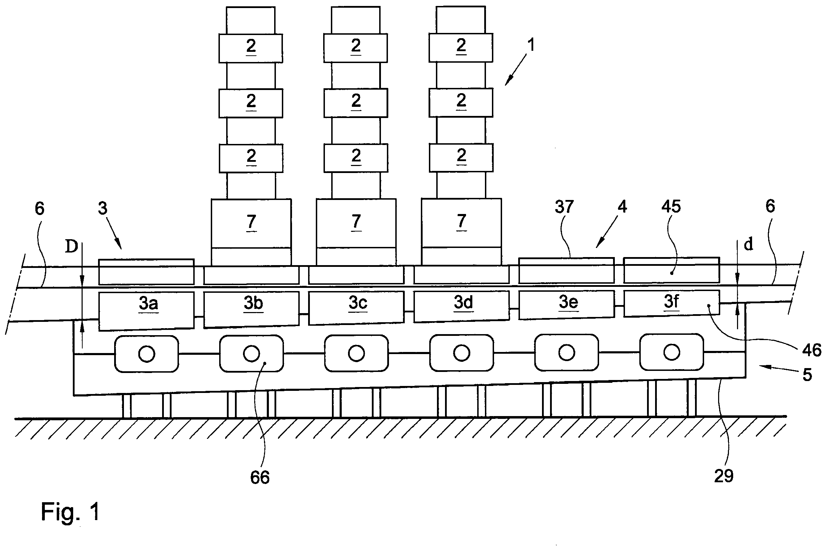

Fig. 1 schematically shows an example of an assembly of a number of columnar curd draining apparatuses 1, known per se, which are each provided with a number of draining sections 2 and which cooperate with a cheese vat conveying apparatus 3 according to the invention extending along the curd draining apparatuses. The cheese vat conveying apparatus 3 is of the closed type and in this example is arranged to cooperate with six curd draining apparatuses of the Casomatic type or a comparable type. In the drawing, for the sake of simplicity, only three curd draining apparatuses are shown. While the cheese vat conveying apparatus is arranged to serve six curd draining apparatuses, it can nonetheless, with a minor adaptation of the control, be used to serve a lower number of curd draining apparatuses.

The cheese vat conveying apparatus shown comprises six sections 3a through 3f, as well as a feed track linked to one end section, for instance section 3f, and a discharge track linked to the other end section, for instance 3a. Each section comprises lifting means in the form of a lifting mechanism to be described in the following and not visible in Fig. 1.

It is noted that a cheese vat conveying apparatus according to the invention is closed at least at the section arranged for cooperation with a curd draining apparatus, but if desired may also be of wholly or partly closed design outside these sections.

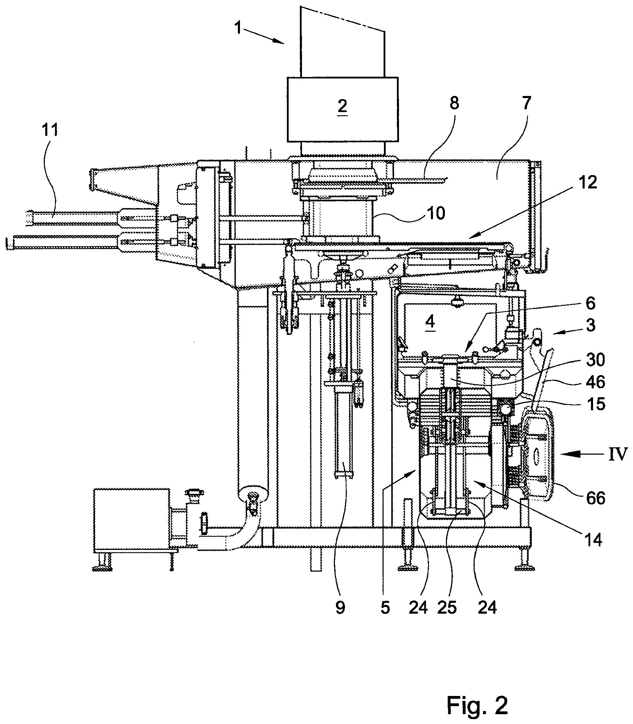

The cheese vat conveying apparatus 3 is positioned under dosing devices 7 of the columnar draining apparatuses 1, as can be properly seen in Fig. 2.

The cheese vat conveying apparatus 3 comprises a conveyor track 6, schematically indicated with a horizontal line, which extends through an upper portion 4 of the cheese vat conveying apparatus 3. The lifting mechanisms are situated in a lower portion 5 of the cheese vat conveying apparatus 3.

According to the invention, the upper and the lower portion of the cheese vat conveying apparatus 3 are separated from each other by a partition, in such a way that whey and curd particles present in the upper portions can hardly if at all reach the lower portions. As a consequence, clean whey can be drawn off from the upper portions. Moreover, the possibly occurring fouling of the lifting mechanisms in the lower portion is strongly reduced, so that they need to be flushed less frequently, or even not at all, between two cleaning cycles using the CIP system.

Fig. 2 schematically shows in vertical cross section a side view of an example of a similar assembly to that shown in Fig. 1 of a columnar curd draining apparatus 1 and a cheese vat conveying apparatus 3 having an upper portion 4 and a lower portion 5 separated therefrom according to the invention. Similar parts are indicated with the same reference numerals in this figure and also in the other figures.

Fig. 2 shows by way of example a (part of a) column of a columnar draining section 1. The column rests on a dosing device 7, which in a conventional manner comprises a guillotine blade 8, which supports a curd column present in the column. The guillotine blade can be slid away, so that the curd column can descend. In doing so, the curd column is supported in a known manner by assembly 9 of a dosing plate and a vertical dosing cylinder, which allows the curd column to descend gradually over a predetermined distance. When thereupon the guillotine blade is closed again, a curd block is cut off. The curd block is received in a sliding sleeve 10, which is thereupon moved sideways by an operating cylinder 11 to a vat filling station 12. The lifting mechanisms are generally indicated in Fig. 2 at 14, and are arranged to move up a cheese vat to be filled from the conveyor track 6 to a filling position situated just under the vat filling station 12, and thereupon to place a filled cheese vat onto the conveyor track 6 again for further conveyance.

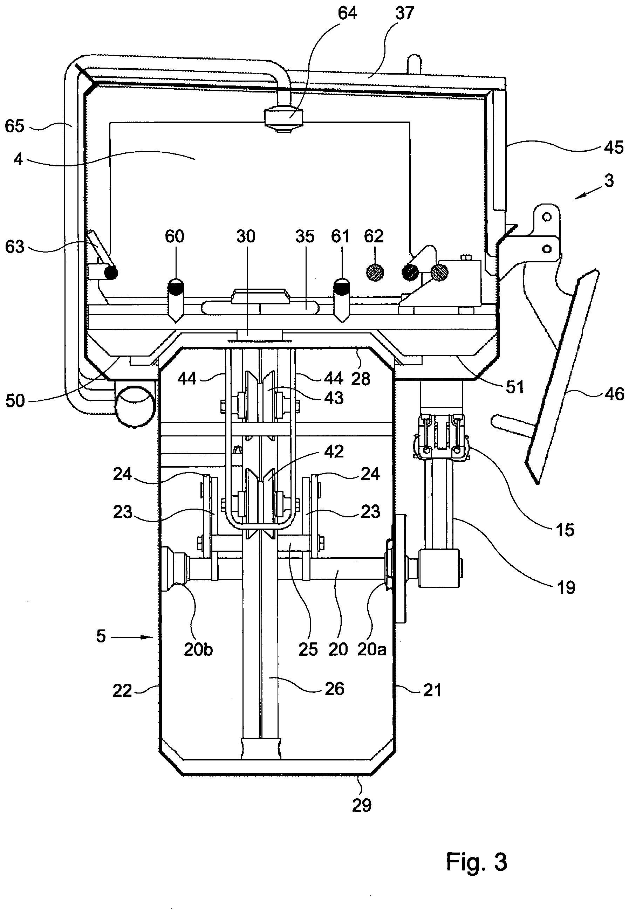

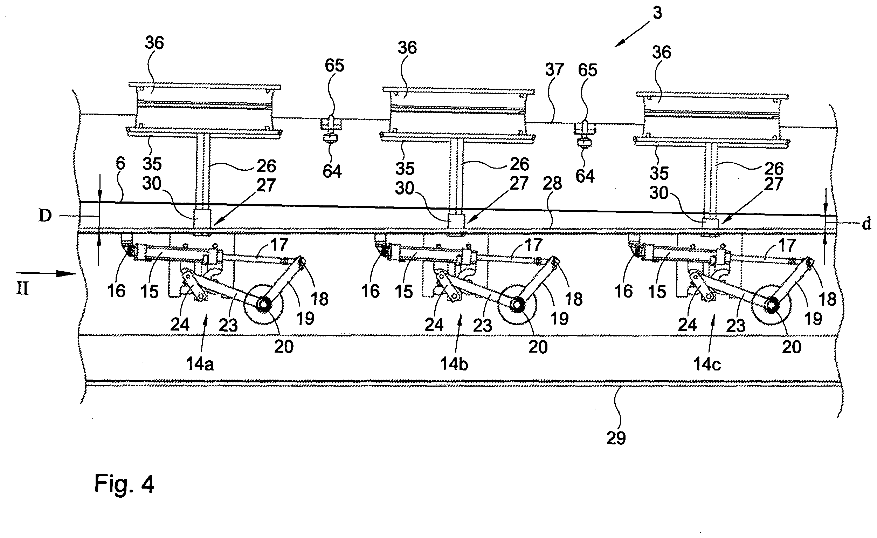

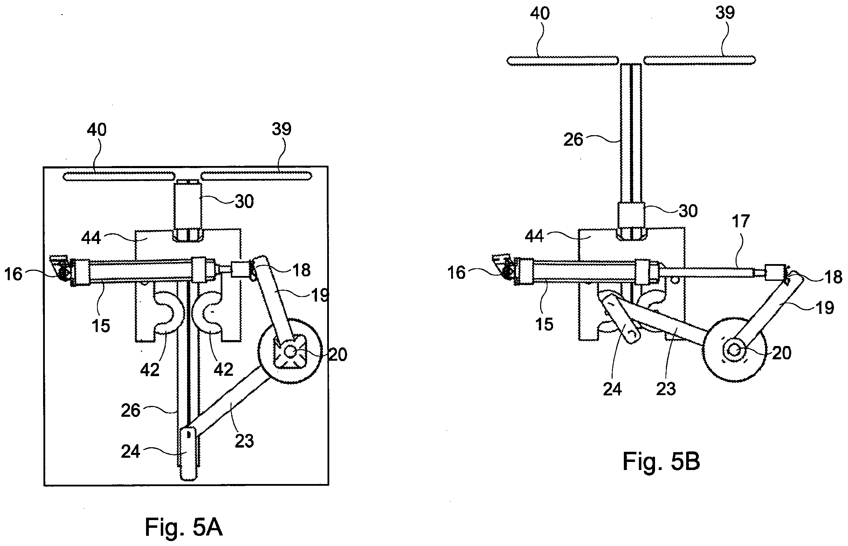

An example of a suitable lifting mechanism can be seen in Figs. 4 and 5 in front view along an arrow IV in Fig. 2, while Figs. 2 and 3 show the lifting mechanism in a view in the longitudinal direction of the conveyor track, as indicated with an arrow II in Fig. 4. In the front view of Fig. 4 along the arrow IV in Fig. 2, housing parts that cover the lifting mechanism are omitted.

As already noted, for each filling station a separate lifting mechanism is present. In Fig. 4, by way of example, three lifting mechanisms 14a, 14b, 14c are shown, which correspond to three juxtaposed curd draining apparatuses 1 as shown in Fig. 1.

In the example shown, each lifting mechanism 14 comprises a driving cylinder 15, which is situated preferably, and also in this example, outside the closed cheese vat conveying apparatus 3, as is indicated in Fig. 3. The cylinder 15 is hingedly suspended by a closed end thereof, as indicated with reference numeral 16. The piston rod 17 of the cylinder is connected hingedly at 18 with a lever 19. The lever 19 is fixedly connected with a rotary shaft 20, in this example extending transversely through the lower portion 5 of the cheese vat conveying apparatus. The shaft 20 in the example shown is bearing-mounted in bearings 20a, 20b situated at the front wall 21 and the rear wall 22 of the lower portion 5 of the closed cheese vat conveying apparatus 3.

The shaft 20 is fixedly connected to one end of two first lever arms 23, whose other ends are hingedly connected to two second, shorter, lever arms 24. The second lever arms are further hingedly connected, by the ends remote from the first lever arms, to a cross rod 25, which is fixedly connected to a vertical lifting arm 26 situated between the first and second lever arms. The lifting arm 26 cooperates with guide elements further described below and extends through a passage opening 27 in a partition 28 between the lower portion 5 and the upper portion 4 of the cheese vat conveying apparatus 3.

The passage opening 27 in this example is provided with a sealing in the form of an aerated labyrinth seal 30, which prevents whey present in the upper portion 4 from flowing directly to the lower portion 5, though splashing drops of whey from the upper portion 4 might end up in the lower portion 5.

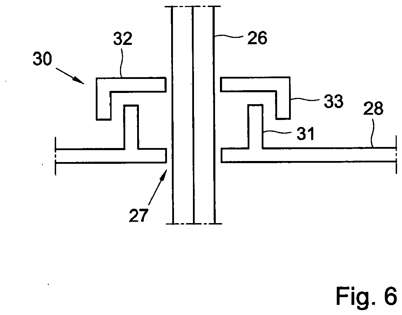

An example of such an aerated labyrinth seal is shown in outline in Fig. 6. In the simplest case, the aerated labyrinth seal 30 can consist of an upstanding collar 31 around the opening 27. In Fig. 6, there is additionally shown a drop tray in the form of a covering disk 32, placed with an interspace above the collar 31, which extends beyond the collar 31 and which, if desired, may be provided with a depending circumferential edge 33. The drop tray 32 may be mounted fixedly with respect to the collar 31 or may be attached to the lifting arm and move up and down along with it. In that case, the drop tray 32 may be mounted directly under a lifting platform for a cheese vat or may be a part thereof. Accordingly, in this example the sealing 30 is not a completely liquid-tight sealing closely fitting around a lifting arm, but a more or less open sealing which prevents unhindered flowthrough of liquid from the upper portion to the lower portion. This makes it simpler to position the lifting mechanisms.

In Figs. 4 and 5, lifting platforms 35 are shown in side view, and in Fig. 3 in end view. The lifting platforms may be formed from two elongate loops 39, 40 extending forwards and backwards, bent from, for instance, wire material, barstock or tubing. This makes the platforms easy to clean. In Fig. 4, furthermore, cheese vats 36 placed on the platforms 35 can be seen. The cheese vats 36 in Fig. 4 are situated in the filling position and then extend above the operatively open upper wall 37 of the upper portion 5 of the cheese vat conveying apparatus.

It is noted that in Fig. 4 the lifting arms 26 are shown in the filling position and that the driving cylinders 15 and the lever systems 19, 20, 23, 24, 25 coupled thereto are shown in the corresponding position. In Fig. 3 the lever system 19, 20, 23, 24, 25 is also drawn in the position associated with the filling position, but the lifting arm 26 is drawn in the low position. In reality, the lifting arm 26 in Fig. 3 would take up the high position associated with the filling position, shown in Fig. 5B.

In Fig. 5A the lifting arm 26 is shown in the low rest position and the cylinder 15 and the associated lever system are shown in the corresponding position. This position is also shown in Fig. 2.

The lifting arm 26 in the example shown has a diamond-shaped cross section, but may also have a differently shaped cross section, for instance circular, elliptic or diamond-shaped with rounded points, etc. Furthermore, in this example, guide means for the lifting arm 26 are used, which comprise two sets of diabolo-shaped guide wheels placed above each other. The wheels of a set each time engage the lifting arm 26 on opposite sides. In Fig. 3, the sets of guide wheels are indicated with 42 and 43. In Fig. 3, of each set of guide wheels, only one wheel is visible. In Figs. 4 and 5, of the lowermost set, both wheels can be seen in part.

The guide wheels are mounted between mounting plates 44, which in the example shown are jointly manufactured from a plate bent into a U-shape, which is welded to the partition 28.

The profile of the guide wheels corresponds to the cross-sectional profile of the lifting arm, so that an accurate guidance of the lifting arm is obtained upon the up and down movements of the lifting arm. Also, the diamond-shaped or otherwise non-circular cross section of the lifting arm and the corresponding profiling of the wheels prevent torsion occurring in the lifting arm.

In Fig. 3 the upper portion 4 of a cheese vat conveying apparatus can be properly seen. In the situation shown, the upper portion 4 is covered at the top with a plate 37 and at the front with a plate 45. These plates are also present in Fig. 1 and Fig. 2, but are taken off in normal operation. The plates 45 are only present during cleaning with the CIP system and when the apparatus is out of operation.

In normal operation, the plates 37 and 45 are removed, but there is a splashboard 46 placed at the front. In Figs. 1, 2, and 3 the splashboard 46 is shown in a folded-down position, but in the operating condition the splashboard is folded upwards and is then situated in front of the front side of the respective section of the cheese vat conveying apparatus.

In the exemplary embodiment shown, the upper portion 4 is wider than the lower portion 5, and the upper portion 4 has, on opposite sides of the partition 28, slightly lower-situated gutters 50, 51 which in operation collect and drain whey released in the upper portion and also flushing liquid, or, during a CIP cycle, cleaning liquid. The gutters 50, 51 in this example gradually slope down from a highest level at one end of the cheese vat conveying apparatus to the other end of the cheese vat conveying apparatus. The same holds for the partition 28 situated between the gutters.

This can be properly seen in Figs. 1 and 4, where the distance between the conveyor track 6 and the level of the partition 28 and the gutters increases from right to left from "d" to "D". Correspondingly, the height of the labyrinth seal increases from right to left in Fig. 4.

Also, the bottom 29 of the lower portion forms a sloping gutter to collect and drain whey drops ending up in the lower portion.

It is noted that the gutters may also be designed differently, for instance with two sections which slope down from both ends towards a centrally located drain pipe or drain gutter.

In the upper portion 4 is the conveyor track 6, which in the example shown is a pawl conveyor, known per se. The cheese vats are stepwise moved in a sliding manner over bar-shaped carriers 60, 61 (Fig. 3) with the aid of pawls 63 moving back and forth in the longitudinal direction of the conveyor track, which pawls in the forward stroke engage a cheese vat, but in the return stroke are pivoted outside the reach of the cheese vats. On the opposite side of pawls 63 is a bar-shaped guide 62 in the longitudinal direction of the conveyor track. Instead of a bar-shaped guide, use can also be made of pawls running along (system according to the pawls 63).

Figs. 3 and 4 furthermore show sprayers 64 placed between the sections of the cheese vat conveying apparatus in the upper portion, and an associated supply line 65 for flushing the upper portion of the cheese vat conveying apparatus with a suitable flushing liquid, such as water and/or whey. This apparatus is used during the CIP cleaning for distributing suitable cleaning fluids.

Finally, Figs. 1 and 2 further show inspection doors 66, which are arranged in sheeting of the lower portions 5 of the sections of the cheese vat conveying apparatus to allow access to the lifting mechanism.

Summarizing, the invention provides a cheese vat conveying apparatus having an upper portion, the product zone, and a lower portion separated therefrom, the operating zone. In the product zone, whey is collected and discharged via gutters and a pump. In the product zone are as few elements as possible for guiding, conveying and moving cheese vats up and down.

In the operating zone are the driving means for the lifting mechanisms. In operation, whey drops may end up in the operating zone. These drops are collected and drained by the closed and, like the gutters, sloping bottom 29.

The two portions are separated by a partition and in this example, at a passage for a lifting arm, by an aerated labyrinth seal.

Both portions can be flushed independently of each other during production. Flushing of the upper portion may be reduced because in that portion there are as few moving parts as possible and hence also less fouling occurs. As a result, effective flushing is easier.

Flushing of the lower portion can be considerably reduced and might be omitted altogether, because only a small amount of whey ends up in the lower portion.

During cleaning with the CIP system, the two portions can be treated simultaneously.

It is noted that after the foregoing, various modifications will be obvious to those skilled in the art. The embodiment described is intended only as a non-limiting example, which can be deviated from on many points. For instance, instead of a pawl conveyor, if desired, a different type of conveyor may be used. Also, variants of the lifting mechanism are possible. Furthermore, a cheese vat conveying apparatus according to the invention may be arranged for cooperation with other types than the draining apparatuses shown and/or a different number of draining apparatuses.

Also, the lower portion may be of at least partly open design. Furthermore, the upper portion may also be designed with a single gutter.

These and similar modifications are understood to be within the framework of the invention as defined by the appended claims.

## Claims

1. A cheese vat conveying apparatus (3) for conveying cheese vats (36) along at least one dosing section of at least one curd draining apparatus (1), which cheese vat conveying apparatus (3) includes driving means for moving cheese vats along a conveyor track (6) of the cheese vat conveying apparatus (1) and lifting means (14) for bringing cheese vats to be filled into a filling position situated above the conveyor track (6) and lowering filled cheese vats onto the conveyor track (6) again, wherein
the cheese vat conveying apparatus (3) has an upper portion (4) in which the conveyor track (6) is situated and at least one lifting platform (35), which upper portion (4) is separated by a partition (28) from a lower portion (5), in which at least one lifting mechanism (14) is situated for moving the lifting platform (35) up and down between the conveyor track (6) and the filling position via a lifting arm (26), wherein the lifting arm (26) extends through a passage opening (27) in the partition (28), **characterized in that** at the passage opening (27) a sealing (30) is arranged, and
the partition (28) slopes down slightly in the longitudinal direction of the cheese vat conveying apparatus (3) to promote the drain of whey.

2. A cheese vat conveying apparatus according to claim 1, **characterized in that** extending along at least one longitudinal edge of the partition (28) is a gutter (50) adjoining the partition (28) and situated somewhat lower, for the drain of whey.

3. A cheese vat conveying apparatus according to any one of the preceding claims, **characterized in that** the lower portion (5) has a bottom (29) forming a sloping gutter for the drain of whey or other liquid having ended up in the lower portion (5).

4. A cheese vat conveying apparatus according to any one of the preceding claims, **characterized in that** the sealing (30) is of the aerated labyrinth seal type, including at least an upstanding collar (31) around the passage opening (27) for the lifting arm (26).

5. A cheese vat conveying apparatus according to claim 4, **characterized in that** the labyrinth seal includes a covering disk (32) situated, with an interspace, above the upstanding collar (31) and extending beyond the upstanding collar (31).

6. A cheese vat conveying apparatus according to claim 5, **characterized in that** the covering disk (32) is provided with a depending circumferential edge (33).

7. A cheese vat conveying apparatus according to any one of the preceding claims, **characterized in that** the lifting mechanism (14) includes a lever system (19, 20 23, 24, 25) situated in the lower portion (5) and coupled with the lifting arm (26), which in operation is driven by a cylinder (15), and that in lower portion guide means for the lifting arm (26) are situated.

8. A cheese vat conveying apparatus according to claim 7, **characterized in that** the cylinder (15) is placed on the outside of a sidewall of the lower portion (5).

9. A cheese vat conveying apparatus according to claim 7 or 8, **characterized in that** the guide means include two pairs of profiled wheels (42, 43) placed above each other on opposite sides of the lifting arm (26), the profiling of the wheels (42, 43) corresponding to the cross-sectional shape of the lifting arm (26).

10. A cheese vat conveying apparatus according to any one of claims 7 to 9, **characterized in that** the lifting arm (26) has a diamond-shaped cross section.

11. An assembly of a cheese vat conveying apparatus according to any one of the preceding claims and at least one curd draining apparatus (1).

## Patentansprüche

1. Käsefassfördervorrichtung (3) zum Fördern von Käsefässern (36) entlang zumindest eines Dosierabschnitts zumindest einer Bruchentwässerungsvorrichtung (1), wobei die Käsefassfördervorrichtung (3) Antriebsmittel zum Bewegen von Käsefässern entlang einer Förderbahn (6) der Käsefassfördervorrichtung (1) und Hubmittel (14) zum Bringen von zu füllenden Käsefässern in eine Füllposition, die sich oberhalb der Förderbahn (6) befindet, und zum Absenken gefüllter Käsefässer wieder auf die Förderbahn (6) einschließt, wobei die Käsefassfördervorrichtung (3) einen oberen Abschnitt (4), in dem sich die Förderbahn (6) befindet, und zumindest eine Hubplattform (35) aufweist, wobei der obere Abschnitt (4) durch eine Abtrennung (28) getrennt ist von einem unteren Abschnitt (5), in dem sich zumindest ein Hubmechanismus (14) zum Bewegen der Hubplattform (35) nach oben und nach unten zwischen der Förderbahn (6) und der Füllposition über einen Hubarm (26) befindet, wobei sich der Hubarm (26) durch eine Durchgangsöffnung (27) in der Abtrennung (28) erstreckt, **dadurch gekennzeichnet, dass**
an der Durchgangsöffnung (27) eine Dichtung (30) angeordnet ist und
die Abtrennung (28) in der Längsrichtung der Käsefassfördervorrichtung (3) leicht abfällt, um den Abfluss von Molke zu fördern.

2. Käsefassfördervorrichtung nach Anspruch 1, **dadurch gekennzeichnet, dass** sich entlang zumindest einer Längskante der Abtrennung (28) eine Rinne (50), die an die Abtrennung (28) anschließt und sich etwas tiefer befindet untere, für den Abfluss von Molke erstreckt.

3. Käsefassfördervorrichtung nach einem der vorangehenden Ansprüche, **dadurch gekennzeichnet, dass** der untere Abschnitt (5) einen Boden (29) aufweist, der eine geneigte Rinne für den Abfluss von Molke oder anderer Flüssigkeit, die im unteren Abschnitt (5) gelandet ist, ausbildet.

4. Käsefassfördervorrichtung nach einem der vorangehenden Ansprüche, **dadurch gekennzeichnet, dass** die Dichtung (30) von der Art einer belüfteten Labyrinthdichtung ist, einschließlich zumindest eines hochstehenden Kragens (31) um die Durchgangsöffnung (27) für den Hubarm (26).

5. Käsefassfördervorrichtung nach Anspruch 4, **dadurch gekennzeichnet, dass** die Labyrinthdichtung eine Abdeckscheibe (32) einschließt, die sich mit einem Zwischenraum oberhalb des hochstehenden Kragens (31) befindet und sich über den hochstehenden Kragen (31) hinaus erstreckt.

6. Käsefassfördervorrichtung nach Anspruch 5, **dadurch gekennzeichnet, dass** die Abdeckscheibe (32) mit einer abhängigen umlaufenden Kante (33) bereitgestellt ist.

7. Käsefassfördervorrichtung nach einem der vorangehenden Ansprüche, **dadurch gekennzeichnet, dass** der Hubmechanismus (14) ein Hebelsystem (19, 20 23, 24, 25) einschließt, das sich im unteren Abschnitt (5) befindet und mit dem Hubarm (26) gekoppelt ist, der im Betrieb durch einen Zylinder (15) angetrieben wird, und dass sich im unteren Abschnitt Führungsmittel für den Hubarm (26) befinden.

8. Käsefassfördervorrichtung nach Anspruch 7, **dadurch gekennzeichnet, dass** der Zylinder (15) außerhalb einer Seitenwand des unteren Abschnitts (5) angeordnet ist.

9. Käsefassfördervorrichtung nach Anspruch 7 oder 8, **dadurch gekennzeichnet, dass** die Führungsmittel zwei Paare profilierter Räder (42, 43) einschließen, die übereinander auf entgegengesetzten Seiten des Hubarms (26) angeordnet sind, wobei die Profilierung der Räder (42, 43) der Querschnittsform des Hubarms (26) entspricht.

10. Käsefassfördervorrichtung nach einem der Ansprüche 7 bis 9, **dadurch gekennzeichnet, dass** der Hubarm (26) einen diamantenförmigen Querschnitt aufweist.

11. Baugruppe aus einer Käsefassfördervorrichtung nach einem der vorangehenden Ansprüche und zumindest einer Bruchentwässerungsvorrichtung (1).

## Revendications

1. Appareil (3) de transport de cuves de fromagerie pour transporter des cuves (36) de fromagerie le long d'au moins une section de dosage d'au moins un appareil (1) d'égouttage de caillé, lequel appareil (3) de transport de cuves de fromagerie comprend un moyen d'entraînement pour déplacer les cuves de fromagerie le long d'un chemin de roulement (6) de l'appareil (1) de transport de cuves de fromagerie et un moyen de levage (14) pour amener les cuves de fromagerie à remplir dans une position de remplissage située au-dessus du chemin de roulement (6) et redescendre les cuves de fromagerie remplies sur le chemin de roulement (6), dans lequel l'appareil (3) de transport de cuves de fromagerie comporte une partie supérieure (4) dans laquelle est situé le chemin de roulement (6) et au moins une plate-forme de levage (35), laquelle partie supérieure (4) est séparée par une cloison (28) d'une partie inférieure (5), dans lequel est situé au moins un mécanisme de levage (14) pour monter et descendre à l'aide d'un bras de levage (26) la plate-forme de levage (35) entre le chemin de roulement (6) et la position de remplissage,
dans lequel le bras de levage (26) passe à travers une ouverture (27) de passage dans la cloison (28), **caractérisé en ce qu'**au niveau de l'ouverture (27) de passage est disposée une étanchéité (30), et la cloison (28) est en pente légère vers le bas dans la direction longitudinale de l'appareil (3) de transport de cuves de fromagerie pour favoriser l'égouttage du lactosérum.

2. Appareil de transport de cuves de fromagerie selon la revendication 1, **caractérisé en ce que**, s'étendant le long d'au moins un bord longitudinal de la cloison (28), il y a un caniveau (50) attenant à la cloison (28) et situé un peu plus bas, pour l'égouttage du lactosérum.

3. Appareil de transport de cuves de fromagerie selon l'une quelconque des revendications précédentes, **caractérisé en ce que** la partie inférieure (5) comporte un fond (29) constituant un caniveau incliné pour l'égouttage du lactosérum ou d'un autre liquide ayant fini dans la partie inférieure (5).

4. Appareil de transport de cuves de fromagerie selon l'une quelconque des revendications précédentes, **caractérisé en ce que** l'étanchéité (30) est du type joint d'étanchéité à labyrinthe aéré, comprenant au moins un collier (31) vertical autour de l'ouverture (27) de passage pour le bras de levage (26).

5. Appareil de transport de cuves de fromagerie selon la revendication 4, **caractérisé en ce que** le joint d'étanchéité à labyrinthe comprend un disque de couverture (32) situé, avec un espace intermédiaire, au-dessus du collier vertical (31) et s'étendant au-delà du collier vertical (31).

6. Appareil de transport de cuves de fromagerie selon la revendication 5, **caractérisé en ce que** le disque de couverture (32) est pourvu d'un bord périphérique (33) pendant.

7. Appareil de transport de cuves de fromagerie selon l'une quelconque des revendications précédentes, **caractérisé en ce que** le mécanisme de levage (14) comprend un système de levier (19, 20 23, 24, 25) situé dans la partie inférieure (5) et accouplé au bras de levage (26), qui, en fonctionnement, est actionné par un vérin (15), et que les moyens de guidage pour le bras de levage (26) sont situés dans la partie inférieure.

8. Appareil de transport de cuves de fromagerie selon la revendication 7, **caractérisé en ce que** le vérin (15) est placé à l'extérieur d'une paroi latérale de la partie inférieure (5).

9. Appareil de transport de cuves de fromagerie selon la revendication 7 ou 8, **caractérisé en ce que** les moyens de guidage comprennent deux paires de roues (42, 43) profilées placées l'une au-dessus de l'autre de part et d'autre du bras de levage (26), le profil des roues (42, 43) correspondant à la forme en section transversale du bras de levage (26).

10. Appareil de transport de cuves de fromagerie selon l'une quelconque des revendications 7 à 9, **caractérisé en ce que** le bras de levage (26) présente une section transversale en forme de losange.

11. Appareil de transport de cuves de fromagerie selon l'une quelconque des revendications précédentes et au moins un appareil (1) d'égouttage de caillé.
